# EUROPÄISCHE PATENTSCHRIFT

(11) **EP 1 336 817 B1**
(45) Veröffentlichungstag und Bekanntmachung des Hinweises auf die Patenterteilung: **28.07.2010**
(21) Anmeldenummer: 03003324.5
(22) Anmeldetag: 13.02.2003
(51) Int. Cl.: G01B 11/27

(54) **Anordnung und Verfahren zum Ermitteln der relativen Ausrichtung zweier Körper**
Apparatus and method for determining the relative attitude of two bodies
Appareil et procédé pour déterminer l'orientation relative de deux corps

(30) Priorität: 14.02.2002 DE 10206162
(43) Veröffentlichungstag der Anmeldung: 20.08.2003
(73) Patentinhaber: Prüftechnik Dieter Busch AG, 85737 Ismaning (DE)
(72) Erfinder: Lysen, Heinrich, 85748 Garching (DE)

(56) Entgegenhaltungen:
- WO-A-01/50082
- DE-A1- 3 335 336
- DE-A1- 4 433 126
- US-A- 5 798 828

## Beschreibung

Die vorliegende Erfindung betrifft eine Anordnung und ein Verfaluen zum Ermitteln der Ausrichtung von ausgezeichneten Achsen eines ersten und eines zweiten Körpers, beispielsweise zweier Walzen, Wellen oder Riemenscheiben, relativ zueinander.

Aus der WO 01/50082A1 sind eine Vorrichtung und ein Verfahren zum Ermitteln der Ausrichtung zweier Riemenscheiben relativ zueinander bekannt. Dabei sind zwei einander entsprechende Meßeinrichtungen vorgesehen, welche jeweils an der Lauffläche einer der beiden Riemenscheiben angebracht werden können. Jede Meßeinrichtung umfaßt eine Laserlichtquelle, die ein fächerförmiges Laserstrahlenbündel abgibt, welches in einer Ebene liegt, die parallel zu der Stirnfläche der jeweiligen Riemenscheibe ist. Zu beiden Seiten jeder Laserlichtquelle ist jeweils ein Lichtsensor vorgesehen, wobei die Laserlichtquelle und die beiden Lichtsensoren jeweils auf einer Geraden liegen. Wenn die Riemenscheibendrehachsen parallel zueinander liegen und die Riemenscheiben keinen Parallelversatz aufweisen, verläuft der von der gegenüberliegenden Meßeinrichtung abgegebene Laserstrahlenfächer durch beide Lichtsensoren. Eine korrekte Ausrichtung der beiden Riemenscheiben relativ zueinander soll anhand entsprechender Signale der jeweils zwei Sensoren der beiden Meßeinrichtungen erkannt werden. Ferner wird auch die Anwendung des Systems zur Ermittlung der Ausrichtung zweier Walzen relativ zueinander beschrieben.

Nachteilig bei diesem System ist die geringe Genauigkeit bezüglich der Ermittlung einer Verdrehung der Wellenachsen bzw. Riemenscheibenachsen zueinander, d.h. eine windschiefe Lage der beiden Achsen zueinander kann nur mit relativ geringer Genauigkeit festgestellt werden.

Aus der DE 3 335 336 sind eine Vorrichtung und ein Verfahren zum Ermitteln der relativen Ausrichtung zweier Körper.

Es ist Aufgabe der vorliegenden Erfindung, eine Anordnung und ein Verfahren zum Ermitteln der Ausrichtung von ausgezeichneten Achsen zweier Körper relativ zueinander zu schaffen, wobei auch die Ermittlung einer windschiefen Lage der ausgezeichneten Achsen mit hinreichender Genauigkeit ermöglicht werden soll.

Diese Aufgabe wird erfindungsgemäß gelöst durch eine Anordnung gemäß Anspruch 1 sowie ein Verfahren gemäß Anspruch 9. Bei dieser erfindungsgemäßen Lösung ist vorteilhaft, daß auch eine windschiefe Lage der ausgezeichneten Achsen der beiden Körper zueinander mit hinreichender Genauigkeit ermittelt werden kann.

Bevorzugte Ausgestaltungen der Erfindung ergeben sich aus den Unteransprüchen.

Nachfolgend wird die Erfindung anhand der beigefügten Zeichnungen beispielhaft näher erläutert. Es zeigen:
Fig. 1 schematisch eine perspektivische Ansicht einer Anordnung zum Ermitteln der Ausrichtung zweier Körper zueinander, einschließlich der ausgesandten Lichtstrahlen;
Fig. 2 schematisch die Verwendung der Anordnung von Fig. 1 zum Ermitteln der Ausrichtung zweier Walzen zueinander;
Fig. 3 schematisch die Anwendung der Anordnung von Fig. 1 zum Ermitteln der Ausrichtung zweier gekuppelter Wellen zueinander; und
Fig. 4 die Anwendung der Anordnung von Fig. 1 zum Ermitteln der Ausrichtung zweier Riemenscheiben zueinander.

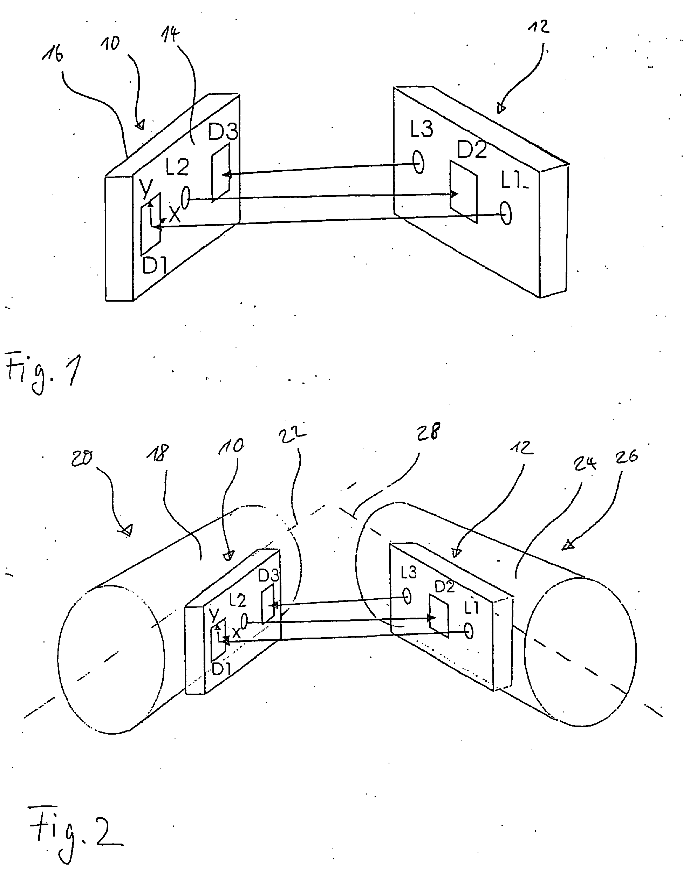

In Fig. 1 ist schematisch ein Beispiel für eine erfindungsgemäße Anordnung zum Ermitteln der Ausrichtung zweier Körper zueinander dargestellt, welche eine erste Meßeinrichtung 10 sowie eine damit zusammenwirkende entsprechende zweite Meßeinrichtung 12 umfaßt. Die erste Meßeinrichtung 10 umfaßt eine Laserlichtquelle L2 sowie zwei optoelektronische Sensoren D1 und D3, wobei die Laserlichtquelle L2 mittig zwischen den beiden Sensoren D1 und D3 angeordnet ist. Die Sensoren D1 und D3 sowie die Laserlichtquelle L2 sind auf der Vorderseite 14 der Meßeinrichtung 10 in etwa auf einer Geraden angeordnet. Die Sensoren D1 und D3 weisen dabei an der Vorderseite 14 der Meßeinrichtung 10 eine planare Sensorfläche auf und sind so ausgebildet, daß sie den Auftreffpunkt eines Lichtstrahls bzw. Lichtflecks auf der Sensorfläche erfassen können, d.h. es wird beispielsweise die x- und y-Koordinate des Auftreffpunkts ermittelt und als Sensorsignal ausgegeben (die y-Achse und die x-Achse der Sensorfläche des Sensors D1 sind in Fig. 1 schematisch angedeutet, wobei die x-Achse in der horizontalen und die y-Achse in der vertikalen Richtung verläuft), d.h. bei den Sensoren D1, D2 und D3 handelt es sich um duolaterale Detektoren.

Die Sensorflächen der Sensoren D1 und D3 liegen in der gleichen Ebene.

Die Laserlichtquelle L2 ist so ausgebildet, daß sie einen im wesentlichen kollimierten, d.h. nicht-divergenten, Laserstrahl aussendet, der senkrecht zur Ebene der Sensorflächen der Sensoren D1 und D3 steht.

Die Rückseite 16 der Meßeinrichtung 10 ist mit einer (nicht gezeigten) Vorrichtung versehen, mittels welcher die Meßeinrichtung 10 für die Messung in geeigneter Weise fest an einem zu vermessenden Körper angebracht werden kann, wie dies nachfolgend näher erläutert wird.

Die zweite Nleßeinrichtung 12 ist als entsprechendes Gegenstück zu der ersten Meßeinrichtung 10 ausgebildet und weist zwei Laserlichtquellen L1 und L3 sowie einen Lichtsensor D2 auf, welcher mittig zwischen den beiden Laserlichtquellen auf einer Geraden mit diesen angeordnet ist. Die Laserlichtquellen L1 und L3 sowie der Sensor D2 sind analog zu der Laserlichtquelle L2 bzw. den Sensoren D1 und D3 ausgebildet. Die von den Lichtquellen L1 und L3 abgegebenen Laserstrahlen sind zueinander parallel und stehen senkrecht zu der Sensorfläche des Sensors D2.

Die Anordnung der Lichtquellen L1, L2 und L3 sowie der Sensoren D1, D2 und D3 ist so gewählt, daß, wenn die beiden Meßeinrichtungen 10 und 12 einander exakt gegenüberliegend und parallel zueinander angeordnet sind, der von der Lichtquelle L1 abgegebene Laserstrahl genau mittig auf die Sensorfläche des Sensors D1 auftrifft, der Laserstrahl der Lichtquelle L2 mittig auf den Sensor D2 und der Laserstrahl der Lichtquelle L3 mittig auf den Sensor D3 auftrifft. In diesem Fall sind die Laserstrahlen der Lichtquellen L1, L2 und L3 parallel zueinander und liegen in der gleichen Ebene, welche gemäß der Darstellung von Fig. 1 horizontal liegt.

Die relative Ausrichtung der beiden Meßeinrichtungen 10 und 12 wird anhand der von den Detektoren D1, D2 und D3 erfaßten Auftreffpunkten der Laserstrahlen der Lichtquellen L1, L2 und L3 mittels einer geeigneten Elektronik (nicht gezeigt) berechnet.

In Fig. 2 ist beispielhaft eine Anwendung für die in Fig. 1 gezeigte Meßanordnung dargestellt, wobei die Meßeinrichtung 10 mit ihrer Rückseite 16 an der Außenumfangsfläche 18 einer Walze 20 formschlüssig angebracht ist. Dabei verläuft die Ebene der Sensorflächen der Sensoren D1 und D3 tangential zu der Umfangsfläche 18 der Walze 20. Die Gerade, auf welcher die Sensoren D1 und D3 sowie die Lichtquelle L2 liegen, verläuft dabei parallel zu der Walzenlängsachse 22.

Die zweite Meßeinrichtung 12 wird in analoger Weise an der Außenumfangsfläche 24 einer zweiten Walze 26 angebracht, welche im wesentlichen parallel zu der ersten Walze 20 angeordnet ist, d.h. die Walzenachsen 22 und 28 verlaufen im wesentlichen parallel. Bei dem gezeigten Beispiel werden die Meßeimichtungen 10 und 12 dazu verwendet, festzustellen, ob und gegebenenfalls welche Abweichung von einer exakt parallelen Ausrichtung der Walzenachsen 22 und 28 vorliegt.

Vor Beginn der eigentlichen Messung werden die beiden Meßeinrichtungen 10 und 12 so auf der Umfangsfläche 18 bzw. 24 verschoben, daß der Laserstrahl der Lichtquelle L2 möglichst das Zentrum der Sensorfläche des Sensors D2 trifft, d.h. die Abweichung des Auftreffpunkts von dem Koordinatenursprung der Sensorfläche des Sensors D2 sollte möglichst gering sein. Anschließend wird die eigentliche Messung vorgenommen, d.h. die Bestimmung der Auftreffpunkte der Laserstrahlen der Lichtquellen L1 und L3 auf den Sensorflächen der Sensoren D1 und D3. Bei der Auswertung werden die Meßergebnisse aller drei Sensoren D1, D2 und D3 berücksichtigt. Eine exakt parallele Ausrichtung der Walzenachsen 22 und 28 liegt dann vor, wenn entweder alle drei Laserstrahlen auf das Zentrum der jeweiligen Detektorfläche auftreffen oder wenn allgemein die ermittelte y-Koordinate der Sensoren D1 und D3 gleich ist und ferner die x-Koordinate der Sensoren D1, D2 und D3 gleich ist (eine Drehung um die Achsen 22, 28 oder eine Verschiebung entlang der Achsen 22, 28 hat keinen Einfluß auf die Parallelität; eine entsprechende Abweichung bei der Justage der beiden Meßeinrichtungen 10 und 12 relativ zueinander wird somit automatisch korrigiert; es ist also nicht nötig, daß der Laserstrahl der Lichtquelle L2 genau das Zentrum der Detektorfläche des Detektors D2 trifft).

Abweichungen von der exakten Parallelität der Achsen 22 und 28, nämlich eine windschiefe und/oder divergente Anordnung der Achsen 22 und 28 relativ zueinander, führen zu einer entsprechenden Verdrehung bzw. Verkippung der Meßeinrichtungen 10 und 12 relativ zueinander, so daß die Geraden, auf welcher die Sensoren D1, D3 und die Lichtquelle L2 sowie der Sensor D2 und die Lichtquellen L1, L2 liegen, nicht mehr parallel zueinander sind, was zu entsprechenden "asymmetrischen" Aurtreffkoordinaten der Laserstrahlen führt, woraus die Lageabweichung quantitativ ermittelt werden kann.

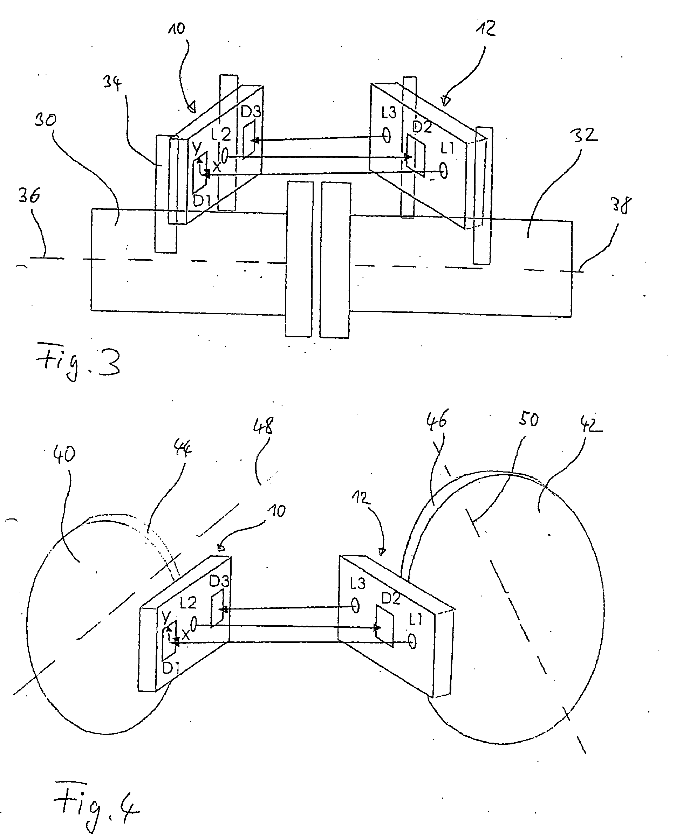

In Fig. 3 ist eine Anwendung gezeigt, bei welcher die Meßeinrichtungen 10 und 12 zum Überprüfen der fluchtenden Ausrichtung der Drehachsen 36 bzw. 38 zweier gekuppelter Wellen 30 und 32 verwendet werden. Hierbei werden die Meßeinrichtungen 10 und 12 mittels entsprechender schematisch angedeuteter Befestigungselemente 34 formschlüssig an dem Außenumfang der entsprechenden Welle 30 bzw. 32 angebracht; im Gegensatz zu dem Beispiel von Fig. 2 liegen die Ebenen der Sensorflächen der Sensoren D1, D2 und D3 nicht tangential, sondern senkrecht zu der Außenumfangfläche der Welle 30 bzw. 32.

Aufgrund der unterschiedlichen geometrischen Anordnung im Vergleich zu der Ausführungsform gemäß Fig. 2 gelten hier andere Kriterien für die Auswertung der Meßergebnisse. So ist z.B. bei der Ausführungsform gemäß Fig. 3 eine Verschiebung in y-Richtung zwischen den beiden Meßeinrichtungen 10 und 12 ein Indiz für einen Parallelversatz der beiden Wellenachsen, wohingegen eine relative Verdrehung zwischen den beiden Meßeinrichtungen 10 und 12 um die Achse des Lichtstrahls der Lichtquelle L2 oder eine dazu parallele Achse akzeptabel ist, da dies nur ein Hinweis auf eine nicht exakte Anfangsjustage der Meßeinrichtungen 10 und 12 ist.

In Fig. 4 ist eine weitere Anwendung der Meßanordnung gezeigt, wobei diese verwendet wird, um die Ausrichtung zweier Riemenscheiben 40 und 42 zueinander zu überprüfen. Hier werden die Meßeinrichtungen 10 und 12 jeweils auf dem Außenumfang bzw. der Lauffläche 44 bzw. 46 der Riemenscheibe 40 bzw. 42 angebracht werden, wobei die Art der Anbringung geometrisch derjenigen von Fig. 2 entspricht, d.h. die Sensorflächen liegen tangential zur Umfangsfläche 44 bzw. 46. Für die Erfassung der Parallelität der Drehachsen 48 bzw. 50 der Riemenscheiben 40, 42 gelten somit die gleichen Kriterien wie bei der Ausführungsform gemäß Fig. 2. Bei der Ausführungsform gemäß Fig. 4 ist jedoch zusätzlich die Ermittlung eines Parallelversatzes zwischen den Riemenscheiben 40 und 42 von Interesse, da die Riemenscheiben für eine optimale Kraftübertragung und zur Minimierung des Verschleißes in der gleichen Ebene liegen sollten. Entsprechend wird die Art der Befestigung der Meßeinrichtungen 10 und 12 an den Riemenscheiben 40, 42 so gewählt, daß eine Verschiebung entlang der Drehachsen 48 bzw. 50 nicht möglich ist (z.B. durch Fixierung in der Riemennut).

Gemäß den beschriebenen Ausführungsformen kann die Meßanordnung von Fig. 1 als Walzenausrichter, Wellenausrichter und Riemenausrichter dienen, indem entsprechende Befestigungsmöglichkeiten vorgesehen werden. Mit der beschriebenen Anordnung lassen sich sechs Freiheitsgrade messen.

Die Laserstrahlen der Lichtquellen L1 und L3 weisen in x-Richtung eine leichte Divergenz auf, wodurch eine Abstandsmessung zwischen den beiden Meßeinrichtungen 10 und 12 ermöglicht wird, da dann der Auftreffpunkt von dem Abstand abhängt. Bei dieser Ausführungsform muß die Justageprozedur und das Auswertungsverfahren entsprechend angepaßt werden, um Abstandseffekte von Fehlausrichtungseffekten trennen zu können. Der Divergenzwinkel ist dabei so gewählt, dass bei der vorgesehenen Abstandsmessaufgabe zwischen dem minimalen Abstand Aₘᵢₙ und dem maximalen Abstand Aₘₐₓ gerade die Detektorgröße DX, d.h. die entsprechende Querabmessung des Detektors, überstrichen wird, so dass sich der Divergenzwinkel Div ergibt aus Div = DX/(Aₘₐₓ - Aₘᵢₙ).

Bei der vorliegenden Erfindung ist zusätzlich zu der guten Genauigkeit bei der Ermittlung einer windschiefen Lage von Vorteil, daß eine leichte Verdrehung der Meßeinrichtungen 10 und 12 relativ zueinander um die zu vermessenden Achsen 22, 28 bzw. 48, 50 für eine exakte Messung nicht hinderlich ist, da dies durch die Auswertung aller drei Sensoren entsprechend korrigiert werden kann.

## Patentansprüche

1. Anordnung zum Ermitteln der Ausrichtung von ausgezeichneten Achsen (22, 28, 36, 38, 48, 50) eines ersten (20, 30, 40) und eines zweiten Körpers (26, 32, 42)
relativ zueinander, mit einer ersten und einer zweiten Messeinrichtung (10, 12), welche in fester räumlicher Beziehung zu der jeweiligen ausgezeichneten Achse an dem ersten Körper bzw. an dem zweiten Körper anbringbar sind, wobei die erste Messeinrichtung (10) eine erste Quelle (L2) zur Abgabe eines Lichtstrahls sowie einen zweiten (D1) und einen dritten optoelektronischen Sensor (D3)
aufweist und die zweite Messeinrichtung (12) eine zweite (L1) und eine dritte Quelle (L3) für einen Lichtstrahl sowie einen ersten optoelektronischen Sensor (D2) aufweist, wobei die optoelektronischen Sensoren so ausgebildet sind, dass sie den Auftreffpunkt eines Lichtstrahls auf dem Sensor ermitteln können, und wobei die erste Lichtquelle dem ersten Sensor zugeordnet ist und die zweite und dritte Lichtquelle dem zweiten bzw. dritten Sensor zugeordnet sind,
**dadurch gekennzeichnet, dass**
in der ersten Messeinrichtung (10) der zweite (D1) und der dritte optoelektronische Sensor (D3) und die erste Quelle (L2) auf einer Geraden angeordnet sind,
in der zweiten Messeinrichtung (12) der erste optoelektronische Sensor (D2) und die zweite (L1) und dritte Quelle (L3) auf einer Geraden angeordnet sind,
dass die Quellen (L1, L2, L3) separate Laserlichtquellen sind und dass die Lichtstrahlen der zweiten Quelle (L1) gegenüber denen der dritten Quelle (L3) zur Abstandsmessung zwischen den Messeinrichtungen (10, 12) eine Divergenz aufweisen.

2. Anordnung nach Anspruch 1, **dadurch gekennzeichnet, dass** die erste Lichtquelle (L2) zwischen dem zweiten (D1) und dem dritten Sensor (D3) liegt und der erste Sensor (D2) zwischen der zweiten (L1) und der dritten Lichtquelle (L3) liegt.

3. Anordnung nach Anspruch 2, **dadurch gekennzeichnet, dass** die von der zweiten (L1) und der dritten Lichtquelle (L3) abgegebenen Lichtstrahlen zu einander parallel sind.

4. Anordnung nach Anspruch 3, **dadurch gekennzeichnet, dass** bei paralleler Ausrichtung der ausgezeichneten Achsen (22, 28, 36, 38, 48, 50) der von der ersten Lichtquelle (L2) abgegebene Lichtstrahl parallel zu den von der zweiten (L1) und der dritten Lichtquelle (L3) abgegebenen Lichtstrahlen ist.

5. Anordnung nach Anspruch 4, **dadurch gekennzeichnet, dass** die Sensoren (D1, D2, D3) planare Sensorflächen aufweisen, wobei die Ebenen der Sensorflächen des zweiten (D1) und dritten Sensors (D3) senkrecht zu dem von der ersten Lichtquelle (L2) abgegebenen Lichtstrahl stehen, und wobei die Ebene der Sensorfläche des ersten Sensors (D2) senkrecht zu den von der zweiten (L1) und der dritten Lichtquelle (L3) abgegebenen Lichtstrahlen stehen.

6. Anordnung nach einem der vorhergehenden Ansprüche, **dadurch gekennzeichnet, dass** die Messeinrichtungen (10, 12) jeweils zur Anbringung an der Außenumfangsfläche eines zylindrischen Körpers, insbesondere einer Walze (20, 26), ausgebildet sind, wobei die Lichtstrahlen senkrecht zur jeweiligen Außenumfangsfläche (18, 24) abgegeben werden.

7. Anordnung nach Anspruch 1 bis 5, **dadurch gekennzeichnet, dass** die Messeinrichtungen (10, 12) jeweils zur Anbringung an der Außenumfangsfläche eines zylindrischen Körpers, insbesondere einer Welle (30, 32), ausgebildet sind, wobei die Lichtstrahlen parallel zur jeweiligen Außenumfangsfläche abgegeben werden.

8. Anordnung nach Anspruch 1 bis 5, **dadurch gekennzeichnet, dass** die Messeinrichtungen (10, 12) jeweils zur Anbringung an der Außenumfangsfläche (44, 46) einer Riemenscheibe (40, 42) ausgebildet sind.

9. Verfahren zum Ermitteln der Ausrichtung von ausgezeichneten Achsen (22, 28, 36, 38, 48, 50) eines ersten (20, 30, 40) und eines zweiten Körpers (26, 32, 42) relativ zueinander, wobei eine erste (10) und eine zweite Messeinrichtung (12) in fester Beziehung zu der jeweiligen ausgezeichneten Achse an dem ersten Körper bzw. an dem zweiten Körper angebracht werden,
von der ersten Messeinrichtung mittels einer ersten Lichtquelle (L2) ein erster Lichtstrahl auf einen an der zweiten Messeinrichtung vorgesehenen ersten optoelektronischen Sensor (D2) abgegeben wird, und von der zweiten Messeinrichtung mittels einer zweiten bzw. dritten Lichtquelle (L1, L3) ein zweiter und ein dritter Lichtstrahl auf einen an der ersten Messeinrichtung vorgesehenen zweiten (D1) bzw. dritten optoelektronischen Sensor (D3) abgegeben wird,
von den optoelektronischen Sensoren jeweils der Auftreffpunkt des zugeordneten Lichtstrahls auf der Sensorfläche ermittelt wird, und
aus den ermittelten Auftreffpunkten des ersten, zweiten und dritten Lichtstrahls die relative Ausrichtung der beiden Messeinrichtungen berechnet wird,
**dadurch gekennzeichnet, dass** die Lichtstrahlen der zweiten Lichtquelle (L1) gegenüber denen der dritten Lichtquelle (L3) zur Messung des Abstands der Messeinrichtungen (10, 12) eine Divergenz aufweisen.

10. Verfahren nach Anspruch 9,
**dadurch gekennzeichnet, dass** vor der Ermittlung der Auftreffpunkte der von der zweiten (L1) und der dritten Lichtquelle (L3) abgegebenen Lichtstrahlen die beiden Messeinrichtungen (10, 12) so platziert werden, dass der von der ersten Lichtquelle (L2) abgegebene Lichtstrahl auf eine Referenzgerade oder einen Referenzpunkt auf dem ersten Sensor (D2) auftrifft.

11. Verfahren nach Anspruch 9 oder 10, **dadurch gekennzeichnet, dass** die Lichtstrahlen senkrecht zu den jeweiligen Sensorflächen abgegeben werden.

## Claims

1. Arrangement for determining the alignment of distinguished axes (22, 28, 36, 38, 48, 50) of a first (20, 30, 40) and a second body (26, 32, 42) relative to one another, having a first and a second measuring device (10, 12) which can be fitted in a fixed spatial relationship with the respective distinguished axis on the first body and on the second body, the first measuring device (10) having a first source (L2) for outputting a light beam, and a second (D1) and a third optoelectronic sensor (D3), and the second measuring device (12) having a second (L1) and a third source (L3) for a light beam as well as a first optoelectronic sensor (D2), the optoelectronic sensors being designed such that they can determine the point of incidence of a light beam on the sensor, and the first light source being assigned to the first sensor and the second and third light sources being assigned to the second and third sensor, respectively, **characterized in that** in the first measuring device (10) the second (D1) and the third optoelectronic sensor (D3) and the first source (L2) are arranged on a straight line, **in that** in the second measuring device (12) the first optoelectronic sensor (D2) and the second (L1) and the third source (L3) are arranged on a straight line, **in that** the sources (L1, L2, L3) are separate laser light sources, and **in that** the light beams of the second source (L1) diverge from those of the third source (L3) for the purpose of measuring the spacing of the measuring devices (10, 12).

2. Arrangement according to Claim 1, **characterized in that** the first light source (L2) lies between the second (D1) and the third sensor (D3), and the first sensor (D2) lies between the second (L1) and the third light source (L3).

3. Arrangement according to Claim 2, **characterized in that** the light beams output by the second (L1) and the third light source (L3) are parallel to one another.

4. Arrangement according to Claim 3, **characterized in that** given a parallel alignment of the distinguished axes (22, 28, 36, 38, 48, 50) the light beam output by the first light source (L2) is parallel to the light beams output by the second (L1) and the third light source (L3).

5. Arrangement according to Claim 4, **characterized in that** the sensors (D1, D2, D3) have planar sensor surfaces, the planes of the sensor surfaces of the second (D1) and third sensors (D3) being perpendicular to the light beam output by the first light source (L2), and the plane of the sensor surface of the first sensor (D2) being perpendicular to the light beams output by the second (L1) and the third light source (L3).

6. Arrangement according to one of the preceding claims, **characterized in that** the measuring devices (10, 12) are respectively designed to be fitted on the outer peripheral surface of a cylindrical body, in particular a roller (20, 26), the light beams being output perpendicular to the respective outer peripheral surface (18, 24).

7. Arrangement according to one of Claims 1 to 5, **characterized in that** the measuring devices (10, 12) are respectively designed to be fitted on the outer peripheral surface of a cylindrical body, in particular a roller (30, 32), the light beams being output parallel to the respective outer peripheral surface.

8. Arrangement according to one of Claims 1 to 5, **characterized in that** the measuring devices (10, 12) are respectively designed to be fitted on the outer peripheral surface (44, 46) of a belt pulley (40, 42).

9. Method for determining the alignment of distinguished axes (22, 28, 36, 38, 48, 50) of a first (20, 30, 40) and a second body (26, 32, 42) relative to one another, a first (10) and a second measuring device (12) being fitted in a fixed relationship with the respective distinguished axis on the first body and on the second body, a first light beam being output by the first measuring device by means of a first light source (L2) onto a first optoelectronic sensor (D2) provided on the second measuring device, and a second and a third light beam being output by the second measuring device by means of a second and third light source (L1, L3), respectively, onto a second (D1) and third optoelectronic sensor (D3), respectively, provided on the first measuring device, the optoelectronic sensors respectively determining the point of incidence of the associated light beam on the sensor surface, and the relative alignment of the two measuring devices being calculated from the determined points of incidence of the first, second and third light beams, **characterized in that** the light beams of the second light source (L1) diverge from those of the third light source (L3) for the purpose of measuring the spacing of the measuring devices (10, 12).

10. Method according to Claim 9, **characterized in that** before the determination of the points of incidence of the light beams output by the second (L1) and the third light source (L3), the two measuring devices (10, 12) are placed such that the light beam output by the first light source (L2) is incident on a reference straight line or a reference point on the first sensor (D2).

11. Method according to Claim 9 or 10, **characterized in that** the light beams are output perpendicular to the respective sensor surfaces.

## Revendications

1. Appareil pour déterminer l'orientation d'axes caractéristiques (22, 28, 36, 38, 48, 50) d'un premier corps (20, 30, 40) et d'un deuxième corps (26, 32, 42) l'un par rapport à l'autre,
avec un premier et un deuxième équipement de mesure (10, 12) pouvant être fixés solidairement dans l'espace par rapport à l'axe caractéristique correspondant au premier corps et respectivement au deuxième corps, le premier équipement de mesure (10) comportant une première source (L2) fournissant un rayon lumineux ainsi qu'un deuxième capteur optoélectronique (D1) et un troisième capteur optoélectronique (D3) et le deuxième équipement de mesure (12) comportant une deuxième source (L1) et une troisième source (L3) pour un rayon lumineux ainsi qu'un premier capteur optoélectronique (D2), dans lequel les capteurs optoélectroniques sont réalisés de manière à pouvoir déterminer le point d'impact d'un rayon lumineux sur le capteur, et dans lequel la première source lumineuse est associée au premier capteur et la deuxième et la troisième source lumineuse au deuxième et respectivement au troisième capteur, **caractérisé en ce que**
dans le premier équipement de mesure (10) le deuxième capteur optoélectronique (D1) et le troisième capteur optoélectronique (D3) et la première source (L2) sont disposés alignés,
dans le deuxième équipement de mesure (12) le premier capteur optoélectronique (D2) et la deuxième source (L1) et la troisième source (L3) sont disposés alignés,
**en ce que** les sources (L1, L2, L3) sont des sources de lumière laser séparées et **en ce que** les rayons lumineux de la deuxième source (L1) présentent une divergence par rapport à ceux de la troisième source (L3) pour la mesure de la distance entre les équipements de mesure (10, 12).

2. Appareil selon la revendication 1, **caractérisé en ce que** la première source lumineuse (L2) se situe entre le deuxième capteur optoélectronique (D1) et le troisième capteur optoélectronique (D3) et que le premier capteur optoélectronique (D2) se situe entre la deuxième source lumineuse (L1) et la troisième source lumineuse (L3).

3. Appareil selon la revendication 2, **caractérisé en ce que** les rayons lumineux émis par la deuxième source lumineuse (L1) et la troisième source lumineuse (L3) sont parallèles entre eux.

4. Appareil selon la revendication 3, **caractérisé en ce que** lors de l'orientation parallèle des axes caractéristiques (22, 28, 36, 38, 48, 50), le rayon lumineux émis par la première source lumineuse (L2) est parallèle à ceux émis par la deuxième source lumineuse (L1) et la troisième source lumineuse (L3).

5. Appareil selon la revendication 4, **caractérisé en ce que** les capteurs (D1, D2, D3) présentent des surfaces de capteurs planes, dans lequel les plans des surfaces de capteurs du deuxième capteur optoélectronique (D1) et du troisième capteur optoélectronique (D3) sont perpendiculaires au rayon lumineux émis par la première source lumineuse (L2) et dans lequel le plan de la surface de capteur du premier capteur (D2) est perpendiculaire aux rayons lumineux émis par la deuxième source lumineuse (L1) et la troisième source lumineuse (L3).

6. Appareil selon une des revendications précédentes, **caractérisé en ce que** les équipements de mesure (10, 12) sont réalisés pour la fixation sur la surface correspondante du pourtour extérieur d'un corps cylindrique, notamment d'un rouleau (20, 26), les rayons lumineux étant émis perpendiculairement à la surface correspondante du pourtour extérieur (18, 24).

7. Appareil selon les revendications 1 à 5, **caractérisé en ce que** les équipements de mesure (10, 12) sont réalisés pour la fixation sur la surface correspondante du pourtour extérieur d'un corps cylindrique, notamment d'un arbre (30, 32), les rayons lumineux étant émis parallèlement à la surface correspondante du pourtour extérieur.

8. Appareil selon les revendications 1 à 5, **caractérisé en ce que** les équipements de mesure (10, 12) sont réalisés pour la fixation sur la surface correspondante du pourtour extérieur (44, 46) d'une poulie (40, 42).

9. Procédé pour déterminer l'orientation d'axes caractéristiques (22, 28, 36, 38, 48, 50) d'un premier corps (20, 30, 40) et d'un deuxième corps (26, 32, 42) l'un par rapport à l'autre, dans lequel un premier équipement de mesure (10) et un deuxième équipement de mesure (12) sont fixés solidairement à l'axe caractéristique correspondant sur le premier corps et respectivement sur le deuxième corps,
dans lequel un premier rayon lumineux est émis par le premier équipement de mesure au moyen d'une première source (L2) vers un premier capteur optoélectronique (D2) prévu sur le deuxième équipement de mesure, et un deuxième et un troisième rayon lumineux sont émis par le deuxième équipement de mesure au moyen d'une deuxième et respectivement d'une troisième source lumineuse (L1, L3) vers un deuxième capteur optoélectronique (D1) et respectivement un troisième capteur optoélectronique (D3) prévus sur le premier équipement de mesure,
dans lequel les capteurs optoélectroniques déterminent le point d'impact respectif du rayon lumineux correspondant sur la surface du capteur, et
on calcule l'orientation relative des deux équipements de mesure à partir des points d'impact déterminés des premier, deuxième et troisième rayons lumineux,
**caractérisé en ce que**
les rayons lumineux de la deuxième source lumineuse (L1) présentent une divergence par rapport à ceux de la troisième source lumineuse (L3) pour la mesure de la distance entre les équipements de mesure (10, 12).

10. Procédé selon la revendication 9,
**caractérisé en ce qu'**avant la détermination des points d'impact des rayons lumineux émis par la deuxième source lumineuse (L1) et la troisième source lumineuse (L3), les deux équipements de mesure (10, 12) sont placés de telle sorte que le rayon lumineux émis par la première source lumineuse (L2) frappe une droite de référence ou un point de référence sur le premier capteur (D2).

11. Procédé selon la revendication 9 ou 10,
**caractérisé en ce que** les rayons lumineux sont émis perpendiculairement aux surfaces de capteurs correspondantes.
